# EUROPÄISCHE PATENTSCHRIFT

(11) **EP 0 497 940 B1**
(45) Veröffentlichungstag und Bekanntmachung des Hinweises auf die Patenterteilung: **24.11.1999**
(21) Anmeldenummer: 91914155.6
(22) Anmeldetag: 21.08.1991
(51) Int. Cl.: D01F 6/80, C08G 69/36

(54) **POLYAMIDE FILAMENT, VERFAHREN ZUR HERSTELLUNG DESSELBEN UND SEINE VERWENDUNG**
POLYAMIDE FILAMENT, PROCESS FOR PRODUCING IT AND ITS USE
FILAMENT EN POLYAMIDE, PROCEDE POUR SA FABRICATION ET UTILISATION

(30) Priorität: 27.08.1990 CH 277790
(43) Veröffentlichungstag der Anmeldung: 12.08.1992
(73) Patentinhaber: NYLSTAR SA, 62054 Saint-Laurent Blangy Cedex (FR)
(72) Erfinder: STÄHLIN, Roland, F-69003 Lyon (FR); ENGGASSER, Josiane, CH-6020 Emmenbrücke (CH)
(74) Vertreter: Herrmann, Peter Johannes, Dr.
(86) Internationale Anmeldenummer: CH9100177
(87) Internationale Veröffentlichungsnummer: WO9203602

(56) Entgegenhaltungen:
- EP-A- 0 159 635
- EP-A- 0 245 072
- DE-A- 1 953 469
- FR-A- 2 108 111
- Database WPIL, Nr. 84-137491, Derwent Publications Ltd, (Londen, GB), & JP, A, 59071415 (TORAY IND. INC.) 23. April 1984, siehe den ganzen Artikel

## Beschreibung

Die Erfindung betrifft ein Polyamid POY-Filament, bestehend aus wenigstens 80 Gew.-% Nylon 66 sowie ein Verfahren zu dessen Herstellung und seine Verwendung.

Nylon 66 weist ausgezeichnete thermisch-mechanische Eigenschaften auf. Es eignet sich daher u. a. vorzüglich zur Herstellung von Filamenten via Schmelzspinnen. Als charakteristischer Nachteil bei dieser Verarbeitung von PA 66 - Polymer ist jedoch zu beachten, dass ein Phänomen beobachtet wird, welches als Low-Luster bzw. LL-Empfindlichkeit bekannt ist. Es wird durch Sphärolith-Inhomogenitäten, die sich beim Spinn- bzw. Spinnstreckprozess unterhalb der Spinndüse während dem Abkühlen im Faden ausbilden, verursacht. Als Folge davon werden vor allem der Spinn- und Strecklauf sowie die mechanischen Eigenschaften teilweise stark negativ beeinflusst. Das sog. LL-Phänomen tritt besonders bei höheren Fibrillen-Titern auf, die im Blasschacht langsamer als dünne Fibrillen abkühlen.

Der LL kann künstlich durch eine Absenkung der Schmelzetemperatur im Bereich des Austritts aus der Spinndüse ausgelöst werden (sog. Temperatur-LL). Dank diesem Verfahren können verschiedene Massnahmen wie z. B. die chemische Modifikation der PA 66-Matrix hinsichtlich ihrer Eignung zur Erniedrigung der LL-Sensibilität bzw. der Sphärolithbildung untersucht werden.

Die Verhinderung der Sphärolithbildung ist ein Problem, welches schon seit längerem bearbeitet wird. Aus der US-A-4 919 874 ist beispielsweise ein Verfahren zur Herstellung von Nylonfilamenten durch Mischung von Nylon 66 mit Nylon 6 und Copolymerisieren von Hexamethylenadipamid mit ε-Caprolactam bekannt. Die Sphärolithbildung wird durch Zusatz eines wasserlöslichen anorganischen Calciumsalzes erzwungen. Ziel ist nicht die Verhinderung, sondern die Erzeugung einer grossen Anzahl von sehr kleinen Sphärolithen in möglichst homogener Verteilung. Neben der Tatsache, dass solche PA 66 - Filamente weiterhin mit Sphärolithen durchsetzt sind, fällt als weiterer Nachteil der tiefere Schmelzpunkt ins Gewicht, der durch den Zusatz an ε-Caprolactam in Kauf genommen werden muss. Ein alleiniger Zusatz an Caprolactam vermag das LL-Problem zudem nicht lösen, da der Einfluss der Zugabe von ε-Caprolactam im Bereich von 1 - 3 Gew.-% Co-Anteil auf die LL-Empfindlichkeit gering ist.

Eine Steigerung des Caprolactamanteils über ca. 3 % hinaus hat den Nachteil, dass der Schmelz- und Erweichungspunkt so weit erniedrigt wird, dass die weitere Verarbeitbarkeit, im speziellen die Texturierbarkeit verschlechtert wird. Im weiteren wirken sich hohe Caprolactamkonzentrationen auch äusserst negativ auf die thermo-mechanischen Eigenschaften, wie beispielsweise den Kräuselmodul, aus.

Ein Zusatz von weniger als 1,0 Gew.-% Caprolactan zeigt gegenüber einem Nylon 66 ohne Zusatz keine nennenswerte Verminderung der LL-Anfälligkeit.

Zu den zahlreichen Versuchen, die mit der Zielsetzung unternommen wurden, die Sphärolithbildung und damit den LL-Effekt zu verhindern, zählen auch die Erhöhung der Spinndüsentemperatur, die Verkürzung der Verweilzeit der Schmelze und häufiger Spinndüsenwechsel. Keine der zahlreichen Massnahmen hat jedoch zu einem befriedigenden Erfolg geführt.

Aufgabe der Erfindung ist es daher, ein Polyamidfilament auf Nylon 66-Basis herzustellen, welches einerseits dank weitgehender Verhinderung der Sphärolithbildung mit hoher Produktivität hergestellt und weiterverarbeitet werden kann und welches andererseits hinsichtlich der thermischen und mechanischen Fadeneigenschaften dem Niveau der unmodifizierten PA 66-Niveau sehr nahe kommt.

Eine weitere Aufgabe besteht darin, ein Verfahren zur sphärolithfreien Herstellung von Nylon 66 POY zur Verfügung zu stellen.

Eine weitere Aufgabe der Erfindung ist es, ein Polymer zur Verfügung zu stellen, welches bei Abzugsgeschwindigkeiten über 3000 m/min. unter Beibehaltung der wichtigsten Faden- und Verarbeitungseigenschaften problemlos spinnbar ist.

Erfindungsgemäss wird die Aufgabe nach Patentanspruch 1 dadurch gelöst, dass das Polyamid-POY-Filament - 15 Gew.-% Monomereinheiten des aus Hexahydroterephthalsäure (HHT) und Hexamethylendiamin (HMD) enthält, und einen Schmelzpunkt von 255-260°C aufweist, wobei nach einer Erniedrigung der Blocktemperatur von 295°C auf eine Temperatur bis der maximale LL-Effekt auftritt, der Reisskraftverlust nicht mehr als 10% beträgt.

Die kombinierte Zugabe von 6.HHT-Salz und ε-Caprolactam zum Nylon 66 hat überraschenderweise zu einer guten Anti-LL-Wirkung bei gleichzeitig weitgehender Erhaltung der übrigen Polymer- bzw. Fadeneigenschaften geführt.

Ueberraschenderweise zeigte das derart modifizierte Polymer nur geringe Festigkeitsverluste beim Temperatur-LL, der beim Absenken der Spinndüsentemperatur deutlich länger inhibiert wird und erst bei deutlich tieferen Temperaturen durchbricht. Dies erhöht infolgedessen die Betriebssicherheit des Spinnverfahrens in beträchtlichem Ausmass.

Es ist zweckmässig, das AH-Salz zusammen mit den Comonomeren E-Caprolactam, und Hexahydroterephthalat (HHT) einzudampfen, zu polykondensieren und das Polymerisat schmelzzuspinnen.

Es ist vorteilhaft, die Hexahydroterephthalsäure in Form des in Wasser gelösten 6.HHT-Salzes dem AH-Salz zuzusetzen, wobei die Ansetzkonzentration aus Hexamethylendiamin (HMD) und Hexahydroterephthalsäure (HHT) geschickterweise zwischen 25 und 65 Gew.-%, bevorzugt zwischen 45 und 50 Gew.-% gewählt wird.

Der Schmelz- bzw. Kristallisationspunkt werden mittels DSC-Analyse (Mettler TA 3000) ermittelt. Es wird folgendes Programm angewendet:
50°C -(20K/min) → 290°C
290°C-(20K/min) → 150°C (Ermittlung vom Kristallisationspunkt)
150°C -(10K/min) → 290°C (Ermittlung vom Schmelzpunkt)

Die Erfindung soll anhand von Beispielen erläutert werden.

### Beispiel 1: Synthese des 6.HHT-Salzes (48%-ige wassrige Lösung)

Es wird Wasser (5 1) vorgelegt und darin 15,77 mol (1,83 kg) HMD während ca. 10 min gelöst. In die Lösung werden 15,50 mol (2,67 kg) HHT langsam zudosiert und solange weitergemischt, bis eine klare Lösung resultiert.

Die Temperatur steigt dabei auf ca. 60° - 70°C und wird bei 70°C ± 1°C max. 1 h gehalten und unter Sauerstoffausschluss direkt dem AH-Salz beigemischt.

### Beispiel 2: Polykondensation des je 3% Caprolactam und 6.HHT-Salz enhaltenden Copolyamides:

In den Autoklaven werden die folgenden Substanzen eingewogen:
- AH-Salz : 2044 kg (als 52 %-ige wässrige Lösung)
- Caprolactam : 58,5 kg (als 50 %-ige wässrige Lösung)
- 6.HHT-Salz : 61 kg (als 48 %-ige wässrige Lösung)
- Essigsäure : 4,14 kg (als 25 %-ige wässrige Lösung)

Diese Lösung wird von 52 auf 74 m/m% eingedampft.

Anschliessend wird der Druck in einem Zeitintervall von ca. 25 min auf 19 bar gesteigert, während die Temperatur auf 220° angehoben wird.

Nach Erreichen von 19 bar erfolgt die Zugabe des Mattierungsmittels (9,71 1 einer 25 %-igen TiO₂-Suspension in Wasser).

Die Destillation wird bei konstantem Druck (19 bar) solange fortgesetzt, bis die Temperatur 238°C erreicht. Danach wird der Druck innert 85 min von 19 auf 1 bar (Atmosphärendruck) abgebaut, wahrend die Temperatur auf 267°C steigt. Vor dem Ausstossen und Granulieren der Polymermasse wird die Polykondensationsreaktion drucklos während eines Zeitraumes von 30 min beendet. Das resultierende Polymer weist folgende Eigenschaften auf:
- Schmelzpunkt :: 260°C
- Kristallisationspunkt:: 217°C

Die Polymereigenschaften dieses Co-PA - Beispiels sind in Tabelle 1 zusammengefasst.

### Beispiele 3-6:

**TABELLE 1:**

| Chemische Analysen am Polymer und am Faden | | | | | | | | | | |
|---|---|---|---|---|---|---|---|---|---|---|
| Beispiel | Zusätze in CP Gew.-% | Gew.-% 6.HHT | RV | | AEG mol/t | | CEG mol/t | | Schmelzpunkt 1) | Kristallisationspunkt 1) |
| | | | Polymer | Faden | Polymer | Faden | Polymer | Faden | | |
| 2 | 1 | - | 40.6 | 42.3 | 48.4 | 48.0 | 70.1 | 64.3 | 261.5°C | 219.0 |
| 3 | 2,5 | - | 40.8 | 42.5 | 45.3 | 45.7 | 73.3 | 67.3 | 259.0°C | 216.5 |
| 4 | 3 | 3 | 38.2 | 38.7 | 49.9 | 49.3 | 67.7 | 62.2 | 260.0°C | 217.0 |
| 5 | 3 | 2 | 42.9 | - | 46.5 | - | 60.9 | - | 257.7°C | 215.2 |
| 6 | 5 | 10 | 41.8 | - | 41.1 | - | 69.5 | - | 259.0°C | 219.0 |

| | | | | | | | | | | |
|---|---|---|---|---|---|---|---|---|---|---|
| CP: ε-Caprolactam RV : Relative Viscosität AEG: Aminoendgruppen CEG: Carboxylendgruppen 6.HHT: Salz aus HMD und HHT 1) gemessen am Granulat | | | | | | | | | | |

### Verspinnung der Copolyamide:

Die Referenz- und die erfindungsgemäss modifizierten Polymere wurden nach dem üblichen POY-Verfahren, welches durch die folgenden Daten charakterisiert wird, zu Filamenten versponnen:

| | |
|---|---|
| Durchsatz | 84.0 g/min |
| Schmelzedruck | ca. 265 bar |
| Temp. Spinnblock | 295°C |
| Spulgeschwindigkeit | 4200 m/min |
| Titer | 100 (78) f 20 |

Die mit dieser Einstellung gewonnenen Fäden dienten als Vergleichsmaterial (siehe Tabelle 2: LL-Beurteilung = "i.O."). Danach wurde die Schmelzetemperatur via Erniedrigung der Blocktemperatur gerade soweit abgesenkt, bis die visuelle Beurteilung ergab, dass der LL-Effekt das maximale Niveau erreicht hatte (siehe Tabelle 2: LL-Beurteilung = "xxx").

**TABELLE 2:**

| Uebersicht über die Fadeneigenschaften beim Temperatur-LL | | | | | | | | |
|---|---|---|---|---|---|---|---|---|
| Beispiel | Spinndüsen-Temperatur °C | LL 1) | Ft cN/tex | %-Ft | Dt % | U % | Schmelzpunkt (°C) 2) | Kristallisationpunkt punkt (°C) 2) |
| 2 | 281.6 | i.0. | 35.5 | 100.0 | 78.7 | 0.74 | 258.6 | 230.8 |
| | 273.0 | * | 34.6 | 97.54 | 79.1 | 0.72 | | |
| | 271.2 | *** | 34.2 | 96.3 | 79.7 | 0.71 | | |
| 3 | 281.9 | i.0. | 35.4 | 100.0 | 75.5 | 0.57 | 256.5 | 228.2 |
| | 273.6 | *** | 27.3 | 77.1 | 79.0 | 0.95 | | |
| 4 | 281.7 | i.0. | 37.6 | 100.0 | 74.8 | 0.67 | 256.6 | 229.4 |
| | 273.6 | ** | 35.9 | 95.5 | 75.7 | 1.30 | | |
| | 271.6 | *** | 35.5 | 94.4 | 76.4 | 1.26 | | |

| | | | | | | | | |
|---|---|---|---|---|---|---|---|---|
| 1) Visuelle Beurteilung des LL | | | | | | | | |
| 2) gemessen am Faden | | | | | | | | |

Via Extrapolation wurde der Wert der Spinndüsentemperatur ermittelt, bei der der LL-Effekt erstmals bemerkt wurde: siehe Tabelle 3.

**Tabelle 3**

| Beispiel | Temperatur °C LL-Beginn | ***-LL |
|---|---|---|
| 2 | 274.3 | 271 |
| 3 | 280.8 | 274 |
| 4 | 279.4 | 272 |

Aus den Tabellen 2 und 3 gehen die Vorteile der erfindungsgemässen Modifikation, die auf einer Kombination der Comonomere Caprolactan und Hexahydroterephthalsäure beruht, deutlich hervor:
· tiefste Temperaturgrenze, bei der das LL-Phänomen einsetzt, und damit die beste Betriebssicherheit bezüglich Spinnverfahren.
· kleinster Verlust hinsichtlich der mechanischen Eigenschaften bei jeweils gleicher Spinndüsentemperatur.
· kleinste Differenz zur unmodifizierten Referenz PA 66 hinsichtlich thermischen Eigenschaften (Schmelz-/Kristallisationspunkt).

## Patentansprüche

1. Polyamid-POY-Filament mit reduzierten Sphärulithgehalt, bestehend aus einem Copolymer mit wenigstens 80 Gew.-% PA66 und 3 bis 10 Gew.-% PA 6, dadurch gekennzeichnet, dass das Polyamid-POY-Filament 3-15 Gew.-% Monomereinheiten aus Hexahydroterephthalsäure (HHT) und Hexamethylendiamin (HMD) enthält und einen Schmelzpunkt von 255-260°C aufweist, wobei nach einer Erniedrigung der Blocktemperatur von 295°C auf eine Temperatur, bis der maximale LL-Effekt auftritt, der Reisskraftverlust nicht mehr als 10 % beträgt.

2. Verfahren zur Herstellung eines Polyamid-POY-Filamentes mit reduziertem Sphärulithgehalt, aus wenigstens 80 Gew.-% PA66 und PA6, dadurch gekennzeichnet, dass dem AH-Salz zusammen mit 3-10 Gew.-% ε-Caprolactam, 3-15 Gew.-% einer bei 60-70°C vorbereiteten Mischung in einem Molverhältnis von etwa 1:1 aus Hexahydroterephthalsäure (HHT) und Hexamethylendiamin (HMD) eingedampft, polykondensiert und das Polymerisat schmelzgesponnen wird.

3. Verfahren nach Anspruch 2, dadurch gekennzeichnet, dass die Ansetzkonzentration des Salzes aus Hexamethylendiamin (HMD) und Hexahydroterephthalsäure (HHT) 25-65 Gew.-% in Wasser beträgt.

4. Verwendung des Copolymers nach Anspruch 1 zur Herstellung von PA-Filamenten mit reduziertem Sphärolithgehalt bei gleichzeitig weitgehender Bewahrung der thermischen und thermomechanischen Eigenschaften.

## Claims

1. Polyamide POY filament of reduced spherolite content comprising a copolymer containing at least 80% by weight of PA66 and 3 to 10% by weight of PA6, characterized in that the polyamide POY filament contains 3-15% by weight of monomer units derived from hexahydroterephthalic acid (HHT) and hexamethylenediamine (HMD) and has a melting point of 255-260°C and, after a reduction in the pack temperature from 295°C to a temperature at which the maximum LL effect occurs, the breaking strength loss is not more than 10%.

2. Process for producing a polyamide POY filament of reduced spherolite content comprising at least 80% by weight of PA66 and PA6, characterized in that 66 salt is concentrated together with 3-10% by weight of ε-caprolactam and 3-15% by weight of a mixture, prepared at 60-70°C, of hexahydroterephthalic acid (HHT) and hexamethylenediamine (HMD) in a molar ratio of about 1:1 and polycondensed, and the polymer is melt-spun.

3. Process according to Claim 2, characterized in that the made-up concentration of the salt of hexamethylenediamine (HMD) and hexahydroterephthalic acid (HHT) is 25-65% by weight in water.

4. Use of the copolymer of Claim 1 for producing PA filaments of reduced spherolite content while at the same time substantially preserving the thermal and thermomechanical properties.

## Revendications

1. Filament en polyamide POY avec une teneur réduite en sphérulite, composé d'un copolymère contenant au moins 80 % en masse de PA 66 et 3 à 10 % en masse de PA 6, caractérisé en ce que le filament en polyamide POY contient 3-15 % en masse d'unités de monomère d'acide hexahydrotéréphtalique (HHT) et d'hexaméthylénediamine (HMD) et possède un point de fusion de 255-260°C, tandis qu'après un abaissement de la température des blocs de 295°C à la température d'occurrence de l'effet LL maximum la perte de résistance à la rupture n'est pas supérieure à 10 %.

2. Procédé pour la fabrication d'un filament en polyamide POY avec une teneur réduite en sphérulite, composé d'au moins 80 % en masse de PA 66 et PA 6, caractérisé en ce que le sel AH est vaporisé avec 3-10 % en masse de ε-caprolactame et 3-15 % en masse d'un mélange d'acide hexahydrotéréphtalique (HHT) et d'hexaméthylènediamine (HMD) préparé à 60-70°C dans un rapport de moles de 1:1, polycondensé et le polymérisât est filé au fondu.

3. Procédé selon la revendication 2, caractérisé en ce que la concentration du sel d'hexaméthylènediamine (HMD) et d'acide hexahydrotéréphtalique (HHT) dans l'eau est de 25-65 % en masse.

4. Utilisation du copolymère conforme à la revendication 1 pour la fabrication de filaments PA à teneur réduite en sphérulite avec, simultanément, le maintien des caractéristiques thermiques et thermomécaniques.
